# EUROPEAN PATENT SPECIFICATION

(11) **EP 3 610 738 B1**
(45) Date of publication and mention of the grant of the patent: **09.12.2020**
(21) Application number: 18197831.3
(22) Date of filing: 01.10.2018
(51) Int. Cl.: A24F 47/00

(54) **METHOD AND SYSTEM FOR UNLOCKING ELECTRONIC CIGARETTE**
VERFAHREN UND SYSTEM ZUR ENTRIEGELUNG EINER ELEKTRONISCHEN ZIGARETTE
PROCÉDÉ ET SYSTÈME DE DÉVERROUILLAGE DE CIGARETTE ÉLECTRONIQUE

(30) Priority: 17.08.2018 CN 201810947505
(43) Date of publication of application: 19.02.2020
(73) Proprietor: Shenzhen IVPS Technology Co., Ltd., 518000 Shenzhen Guangdong (CN)
(72) Inventor: OUYANG, Junwei, Shenzhen, Guangdong 518000 (CN)
(74) Representative: IP-PAL Patent & Trademark Attorneys GmbH

(56) References cited:
- WO-A1-2017/055801
- WO-A1-2017/205692
- CN-A- 107 742 072
- US-A1- 2013 319 439
- US-A1- 2014 246 035

## Description

### TECHNICAL FIELD

The present invention relates to the technical field of electronic cigarettes, and in particular, to a method and system for unlocking an electronic cigarette based on face recognition.

### BACKGROUND

Face recognition is a biometric recognition technology for identification based on human facial feature information. A series of related techniques for collecting an image or a video stream containing a face with a video camera or a camera and automatically detecting and tracking the face in the image so as to perform face recognition on the detected face are also commonly referred to as portrait recognition or face recognition. The face recognition technology is widely used because of its intuitiveness and non-reproducibility.

At present, the electronic cigarette is mainly unlocked in such a manner that the user presses a button or a touch screen provided on the electronic cigarette. However, the unlocking method is not specific. That is, any person who obtains the electronic cigarette may successfully unlock and use the electronic cigarette with the above operation, so that it will undoubtedly bring inconvenience to the owner of the electronic cigarette.

Therefore, the prior art has yet to be improved and enhanced. Relevant prior art documents are WO 2017/205692, US 2014/246035, US 2013/319439, WO 2017/055801 and CN 107 742 072.

### SUMMARY

The technical problem to be solved by the present invention is to provide a method and system for unlocking an electronic cigarette based on face recognition in view of the deficiencies of the prior art, so as to achieve the purpose of the personalized unlocking of the electronic cigarette.

In order to solve the above technical problem, the technical solution adopted by the present invention is defined by the appended claims.

Advantageous Effects: compared with the prior art, the present invention provides a method and system for unlocking an electronic cigarette based on face recognition, wherein the method comprises: when collecting a face image, the mobile terminal comparing the collected face image with a preset face template library, and when the comparison is successful, sending an unlocking instruction to the electronic cigarette; and the electronic cigarette receiving the unlocking instruction, and performing a corresponding unlocking operation according to the unlocking instruction. According to the present invention, the interaction between the electronic cigarette and the mobile terminal enables the mobile terminal to send the unlocking instruction to the electronic cigarette when the face is compared successfully, thereby realizing the personalized unlocking of the electronic cigarette, and improving the interest of the use of the electronic cigarette.

### BRIEF DESCRIPTION OF THE DRAWINGS

FIG. 1 is a flow diagram illustrating a preferred embodiment of a method for unlocking an electronic cigarette based on face recognition according to the present invention.
FIG. 2 is a flow diagram illustrating a specific embodiment of entering a face template in a method for unlocking an electronic cigarette based on face recognition according to the present invention.
FIG. 3 is a flow diagram illustrating a specific embodiment of step S10 in a method for unlocking an electronic cigarette based on face recognition according to the present invention.
FIG. 4 is a flow diagram illustrating a specific embodiment of step S13 in a method for unlocking an electronic cigarette based on face recognition according to the present invention.
FIG. 5 is a flow diagram illustrating a specific embodiment of step S20 in a method for unlocking an electronic cigarette based on face recognition according to the present invention.
FIG. 6 is a schematic diagram illustrating the structure of a system for unlocking an electronic cigarette based on face recognition according to the present invention.

### DESCRIPTION OF THE EMBODIMENTS

The present invention provides a method and system for unlocking an electronic cigarette based on face recognition. In order to make the object, the technical solution and the effect of the present invention clearer and more explicit, the present invention will be further described in detail below with reference to the accompanying drawings and embodiments. It is to be understood that the specific embodiments described herein are merely illustrative of the present invention and are not intended to define the present invention.

It is to be understood by those skilled in the art that the singular forms such as "a", "one", "said" and "the" may also include plural forms unless specifically stated. It is to be further understood that the term "comprise" used in the specification of the present invention indicates the presence of a feature, an integer, a step, an operation, an element, and/or a component, but does not exclude the presence or addition of one or more other features, integers, steps, operations, elements, components and/or combination thereof. It will be understood that when an element is referred to as being "connected" or "coupled" to another element, the element may be directly connected or coupled to the other element or there may be an intermediate element. Further, "connected" or "coupled" as used herein may comprise either a wireless connection or a wireless coupling. The term "and/or" as used herein comprises all or any of the units and all combinations of one or more of the associated listed items.

Those skilled in the art will appreciate that all terms (comprising technical and scientific terms) as used herein have the same meaning as commonly understood by those skilled in the art to which the present invention belongs, unless otherwise defined. It is also to be understood that terms such as those defined in a general dictionary should be understood to have the same meaning as the meaning in the context of the prior art, and will not be explained in an idealized or excessively formal meaning unless specifically defined as herein.

The content of the present invention will be further described by the following description of embodiments with reference to the accompanying drawings.

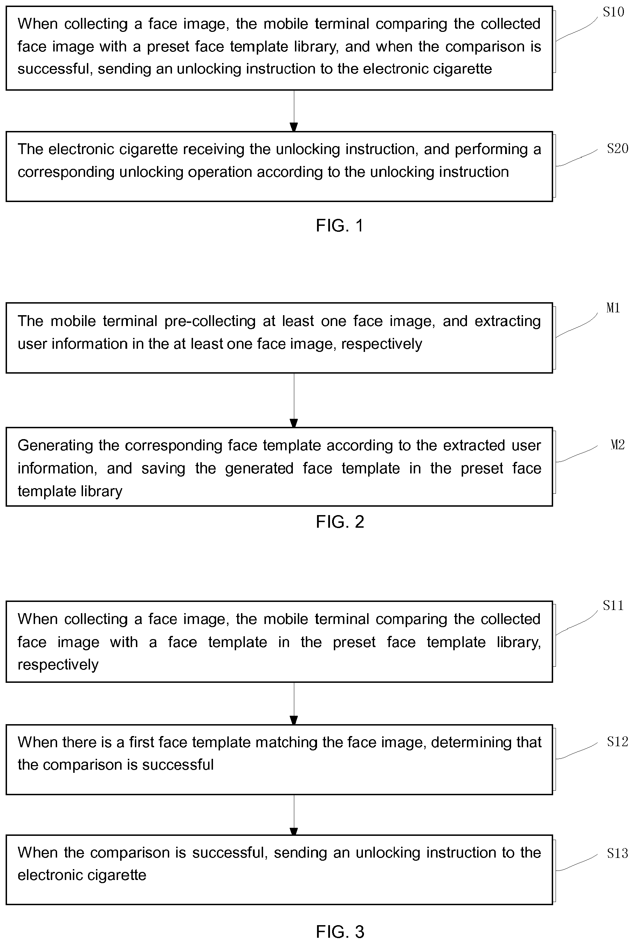

Referring to FIG. 1, FIG. 1 is a flow diagram illustrating a preferred embodiment of a method for unlocking an electronic cigarette based on face recognition according to the present invention. The method comprises:

S10, when collecting a face image, the mobile terminal comparing the collected face image with a preset face template library, and when the comparison is successful, sending an unlocking instruction to the electronic cigarette; and

S20 , the electronic cigarette receiving the unlocking instruction, and performing a corresponding unlocking operation according to the unlocking instruction.

According to the present invention, the interaction between the electronic cigarette and the mobile terminal enables the mobile terminal to send the unlocking instruction to the electronic cigarette, and the electronic cigarette is unlocked according to the received unlocking instruction. In this way, only the face information of the user with the unlocking authority can unlock the electronic cigarette, thereby realizing the personalized operation of the electronic cigarette, preventing the unauthorized user from using the electronic cigarette, and improving the security of the electronic cigarette.

Specifically, in the step S10, the mobile terminal is a device having a face recognition function. The face image is collected by a camera configured on the mobile terminal. Preferably, the camera is a front camera. The preset face template library is used to store a face template pre-recorded into the mobile terminal. The face template is composed of features extracted from a pre-captured face image. For example, the face template may comprise a face eye feature, a face nose feature, a face mouth feature, and a combined feature. The face eye feature may comprise the size and shape of the left and right eyeballs, inter orbital spacing, etc.; the face nose feature may comprise nostril spacing, nose tip length, etc.; the face mouth feature may comprise lip thickness, lip length, etc.; the combined feature may comprise the distance between the nostrils and the left/right eye, etc.

Because the face template is stored in the mobile terminal, the embodiment further comprises a process of entering a face template, as shown in FIG. 2, which specifically comprises:

M1: the mobile terminal pre-collecting at least one face image, and extracting user information in the at least one face image, respectively; and

M2: generating the corresponding face template according to the extracted user information, and saving the generated face template in the preset face template library.

Specifically, in the step M1, the user information refers to facial feature information of the user, comprising features such as the size, position, and distance of the five sense organs such as the iris, the ala nasi, and the corner of the mouth. The mobile terminal receives an instruction for the user to turn on the face recognition function, collects at least one face image, and then extracts the user information in the collected face image, respectively, to generate a face template. For example, a feature vector method may be used to determine various features of the face, and the geometric feature quantities of the various features may be calculated. The set of the geometric feature quantities constitute a geometric feature vector describing the facial feature; and the face pattern template method may also be used. Some standard face templates or face organ templates are stored in the library, and the feature vector set of the face image to be tested is collected to be compared with the data of the template.

In practical applications, in order to expand the face database comparison data, the face template library may further comprise a face template of the user in different scenes or states, for example, the facial features of the user before/after makeup, before/after wearing glasses, etc.

In this embodiment, the electronic cigarette is configured with a communication module, and the communication module may be a wired communication module or a wireless communication module. For example, the communication module may be one or more of WIFI module, Bluetooth module or USB. The electronic cigarette establishes a communication connection with the mobile terminal through a communication module configured by itself to implement interaction there between. Therefore, prior to the mobile terminal comparing the collected face image with a preset face template library when collecting a face image, and when the comparison is successful, sending an unlocking instruction to the electronic cigarette, the method further comprises:

S01, when the mobile terminal receives the connection request of the electronic cigarette, establishing a communication connection with the electronic cigarette according to the instruction of the user;

S02, when the communication connection is successfully established, the electronic cigarette sending its current status information to the mobile terminal at a predetermined time interval, wherein the status information comprises a locked status and an unlocked status; and

S03, the mobile terminal receiving the status information, and performing the step of collecting and comparing a face image in real time when the status information is a locked status.

Specifically, in the step S01, the connection request is sent to the mobile terminal according to the operation of the user by the electronic cigarette. The electronic cigarette may send the connection request to the mobile terminal using a preset communication protocol, wherein the preset communication protocol comprises at least one of WIFI, Bluetooth, or USB communication protocols. In an actual application, the electronic cigarette adds the communication module based on a control circuit board in the hardware as required. The communication module may use WIFI, Bluetooth or USB. Of course, other communication protocols may also be used, such as ZIGBEE, NBIOT, etc. Thus, the electronic cigarette may send the mobile terminal through a preset communication protocol. When the mobile terminal has received the connection request of the electronic cigarette, the connection request is displayed on the display interface, and then the user is prompted to determine, according to the instruction from the user, whether to establish a communication connection with the electronic cigarette.

In the step S02, the preset time is a preset time interval in which the electronic cigarette sends its own status information to the mobile terminal, for example, it may be 1S, 1min, etc. The time may be set as the system default, or may be set according to the battery life of the electronic cigarette or the usage habits of the user. For example, when the battery life of the electronic cigarette is short, the preset time may be appropriately extended to save energy consumption of the electronic cigarette; when the battery life of the electronic cigarette is long, the preset time may be appropriately shortened to improve the detection frequency of the electronic cigarette state so as to improve the frequency at which the mobile terminal turns on the face recognition function, so that the mobile terminal can detect the face image in time. Of course, in practical applications, the electronic cigarette may also send its own state information to the mobile terminal in real time, so that the mobile terminal can acquire the state of the electronic cigarette at any time, increasing the response rate.

The status information comprises a locked status and an unlocked status. When being in a locked status, the electronic cigarette closes most of the functions, and only retains the wake-up function and the communication function with the mobile terminal, thereby minimizing the energy consumption of the electronic cigarette, and extending the battery life. When being in an unlocked status, the electronic cigarette is fully activated so as to respond to various operations and instructions of the user at any time. When successfully establishing a communication connection with the mobile terminal, the electronic cigarette confirms its current status information at the preset time interval, and feeds the acquired status information back to the mobile terminal.

In the step S03, when receiving the status information feedback by the electronic cigarette, the mobile terminal determines the status information. When the status information is a locked status, it indicates that the electronic cigarette is in a to-be-unlocked status. At this time, the mobile terminal turns on the face recognition function and monitors whether the face image is collected. When the face image is collected, the step S10 is performed to compare the collected face images. In this embodiment, the face recognition function of the mobile terminal is turned on only when the electronic cigarette is in the locked status, so that the energy consumption of the mobile terminal can be effectively reduced. The mobile terminal does not need to turn on the face recognition function and collect images all the time, which is beneficial to reduce the operational burden of the mobile terminal. Further, in order to prevent the mobile terminal from continuing to automatically collect the face image due to the fact that the face image cannot be collected for a long time in the case that the face recognition function is turned on, a time threshold or a collection frequency threshold may be set. If the time that mobile terminal has not collected the face image reaches the time threshold, or the collection frequency reaches the collection frequency threshold, the camera of the mobile terminal automatically enters a sleep mode to save energy consumption.

In an embodiment of the present invention, the method further comprises:

S04, when the status information is an unlocked status, the mobile terminal monitoring status information sent by the electronic cigarette in real time.

Specifically, when the status information received by the mobile terminal is an unlocked status, it indicates that the electronic cigarette is currently in an operating status, and the unlocking operation is not required. Therefore, the mobile terminal only needs to continue to monitor the status information sent by the electronic cigarette without turning on the face recognition function.

Illustratively, as shown in FIG. 3, when collecting a face image, the mobile terminal comparing the collected face image with a preset face template library, and when the comparison is successful, sending an unlocking instruction to the electronic cigarette, may specifically comprise:

S11, when collecting a face image, the mobile terminal comparing the collected face image with a face template in the preset face template library, respectively;

S12, when there is a first face template matching the face image, determining that the comparison is successful; and

S13, when the comparison is successful, sending an unlocking instruction to the electronic cigarette.

Specifically, in the steps S11 and S12, the first face template is a face template matching the collected face image. In this embodiment, a similarity threshold may be preset, the collected face image is compared with the face template in the face template library, respectively, and the similarity between the face image and each of the face templates is calculated, respectively. When the similarity is greater than or equal to the similarity threshold, the face template corresponding to the similarity is the first face template matching the face image. At this time, it indicates that the collected face template is compared successfully, that is, the user corresponding to the face image has the authority to unlock the electronic cigarette. When the comparison is successful, the step S13 is performed to send an unlocking instruction to the electronic cigarette, so that the electronic cigarette performs an unlocking operation according to the unlocking instruction.

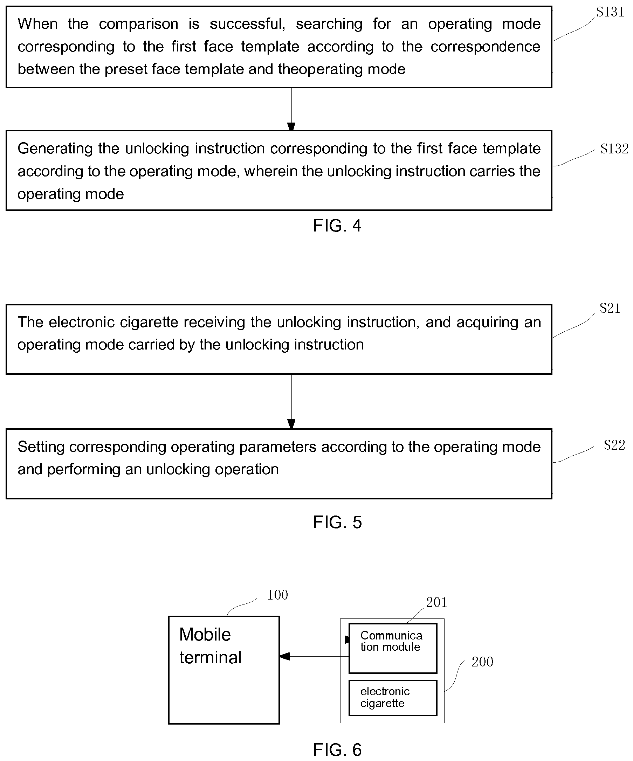

In an embodiment of the present invention, since there may be a plurality of users having unlocking authority, in order to meet the personalized needs of different users, each user is provided with his/her corresponding operating mode, so that each user may operate the electronic cigarette directly according to his/her corresponding operating parameters after unlocking. Therefore, as shown in FIG. 4, when the comparison is successful, sending an unlocking instruction to the electronic cigarette, may specifically comprise:

S131, when the comparison is successful, searching for an operating mode corresponding to the first face template according to the correspondence between the preset face template and the operating mode; and

S132, generating the unlocking instruction corresponding to the first face template according to the operating mode, wherein the unlocking instruction carries the operating mode.

Specifically, in the step S131, the operating mode is a mode in which the electronic cigarette enters an activated status after being unlocked, which is expressed by various operating parameters of the electronic cigarette. That is, one operating mode corresponds to one operating parameter group, wherein the operating parameter group comprises at least parameters such as operating power, display interface style, screen brightness, and indicator color. For example, the operating parameter group corresponding to the operating mode A is as follows: the operating power is 80W, the display interface style is 1, the screen brightness is 300cd/m², and the indicator color is yellow. In an actual application, the correspondence between the operating mode and the operating parameter group may be pre-stored in the mobile terminal, or may be pre-stored in the electronic cigarette. Preferably, the correspondence between the operating mode and the operating parameter group is pre-stored in the electronic cigarette, so that the mobile terminal only needs to transmit the identification information of the operating mode to the electronic cigarette subsequently, thereby reducing the transmission load between the mobile terminal and the electronic cigarette, improving the transmission efficiency, and further improving the unlocking efficiency.

In this embodiment, the correspondence between the preset face template and the operating mode is preset and stored in the mobile terminal, and may be set according to the needs of the user when the user first enters the face template. There may be a one-to-one correspondence between the face template and the operating mode. For example, the operating mode A corresponds to the face template 1 and the operating mode B corresponds to the face template 2. It is also possible that one face template corresponds to a plurality of operating modes, or a plurality of face templates correspond to one operating mode. For example, when the mobile terminal finds that there area plurality of operating modes in the first face template, the mobile terminal displays the plurality of acquired operating modes on the display interface for the user to select, so as to fully satisfy the personalized needs of the user.

When the comparison is successful, the mobile terminal generates an unlocking instruction, searches for the operating mode corresponding to the first face template, then writes the operating mode into the unlocking instruction, and finally sends the unlocking instruction to the electronic cigarette, so that the unlocking instruction received by the electronic cigarette carries the operating mode corresponding to the user so as to provide a basis for setting the operating mode of the electronic cigarette subsequently.

Correspondingly, in this embodiment, as shown in FIG. 5, the electronic cigarette receiving the unlocking instruction, and performing a corresponding unlocking operation according to the unlocking instruction, specifically comprises:

S21,the electronic cigarette receiving the unlocking instruction, and acquiring an operating mode carried by the unlocking instruction; and

S22, setting corresponding operating parameters according to the operating mode and performing an unlocking operation.

Specifically, the electronic cigarette receives the unlocking instruction, acquires an operating mode carried by the unlocking instruction, searches for the corresponding operating parameter group according to the acquired operating mode, and sets the corresponding parameters as a value in the operating parameter group. In this way, when the user unlocks the electronic cigarette, each of the operating parameters of the electronic cigarette is automatically set as its corresponding value, so that the user does not need to manually set the operating parameters, which is convenient for the user to use.

Based on the method for unlocking an electronic cigarette based on face recognition described above, the present invention further provides a system for unlocking an electronic cigarette, as shown in FIG. 6, comprising an electronic cigarette 200 and a mobile terminal 100;

wherein the mobile terminal 100 is configured to, when collecting a face image, compare the collected face image with a preset face template library, and when the comparison is successful, send an unlocking instruction to the electronic cigarette; and

the electronic cigarette 200 is configured to receive the unlocking instruction, and perform an unlocking operation according to the unlocking instruction.

The electronic cigarette 200 is configured with a communication module201, and the communication module 201 comprises at least one of a WIFI module, a Bluetooth module or USB. The electronic cigarette 200 establishes a communication connection with the mobile terminal 100 through the communication module 201, thereby implementing interaction there between.

In the embodiments provided by the present invention, it is to be understood that the disclosed system and method may be implemented in other manners. For example, the device embodiments described above are merely illustrative. For example, the division of the modules is only a logical function division. In actual implementation, there may be another division manner. For example, a plurality of units or components may be combined or may be integrated into another system, or some features may be ignored or not executed. In addition, the mutual coupling or direct coupling or communication connection shown or discussed may be an indirect coupling or communication connection through some interfaces, devices or units, and may be electrical, mechanical or in other forms.

The units described as separate components may or may not be physically separated. The components shown as units may or may not be physical units, that is, may be located in one place, or may be distributed to a plurality of network units. Some or all of the units may be selected according to actual needs to achieve the purpose of the solution of the embodiment.

In addition, each functional unit in each embodiment of the present invention may be integrated into one processing unit, or each unit may exist physically separately, or two or more units may be integrated into one unit. The above integrated unit may be implemented in the form of hardware or in the form of hardware plus software functional units.

The above integrated unit implemented in the form of a software functional unit may be stored in a computer readable storage medium. The above software functional unit is stored in a storage medium and comprises several instructions for causing a computer device (which may be a personal computer, a server, or a network device, etc.) or a processor to perform a part of the steps of the method according to the various embodiments of the present invention. The storage medium described above comprises various media in which program codes maybe stored, such as a USB flash disk, a mobile hard disk, a Read-Only Memory (ROM), a Random Access Memory (RAM), a magnetic disk, or an optical disk.

## Claims

1. A method for unlocking an electronic cigarette based on face recognition, comprising:
when collecting a face image, comparing, the collected face image with a preset face template library by a mobile terminal, and when the comparison is successful, sending an unlocking instruction to the electronic cigarette; and
receiving the unlocking instruction by an electronic cigarette, and performing a corresponding unlocking operation according to the unlocking instruction;
**characterized in that**:
wherein prior to the mobile terminal collecting a face image, comparing the collected face image with a preset face template library, and when the comparison is successful, sending an unlocking instruction to the electronic cigarette, the method further comprises:
when the mobile terminal receives a connection request of the electronic cigarette, establishing a communication connection with the electronic cigarette according to the instruction of the user;
when the communication connection is successfully established, sending, by the electronic cigarette, its current status information to the mobile terminal at a predetermined time interval, wherein the status information comprises a locked status and an unlocked status; and
receiving, by the mobile terminal, the status information, and performing the step of collecting and comparing a face image in real time when the status information is a locked status.

2. The method for unlocking an electronic cigarette according to claim 1, the method further comprising:
when the status information is an unlocked status, monitoring, by the mobile terminal, status information sent by the electronic cigarette in real time.

3. The method for unlocking an electronic cigarette according to claim 1, wherein the electronic cigarette sends a connection request to the mobile terminal using a preset communication protocol, wherein the preset communication protocol comprises at least one of WIFI, Bluetooth or USB communication protocols.

4. The method for unlocking an electronic cigarette according to claim 1, wherein the step of collecting a face image, a mobile terminal comparing the collected face image with a preset face template library, and sending an unlocking instruction to the electronic cigarette when the comparison is successful, comprises:
when collecting a face image, comparing, by a mobile terminal, the collected face image with a face template in the preset face template library, respectively;
when there is a first face template matching the face image, determining that the comparison is successful; and
when the comparison is successful, sending an unlocking instruction to the electronic cigarette.

5. The method for unlocking an electronic cigarette according to claim 4, wherein the step of sending an unlocking instruction to the electronic cigarette when the comparison is successful, comprises:
when the comparison is successful, searching for an operating mode corresponding to the first face template according to a correspondence between the preset face template and the operating mode; and
generating the unlocking instruction corresponding to the first face template according to the acquired operating mode, wherein the unlocking instruction carries the operating mode.

6. The method for unlocking an electronic cigarette according to claim 5, wherein the step of receiving the unlocking instruction, and performing a corresponding unlocking operation according to the unlocking instruction the electronic cigarette, comprises:
receiving, by the electronic cigarette, the unlocking instruction, and acquiring an operating mode carried by the unlocking instruction; and
setting corresponding operating parameters according to the operating mode and performing an unlocking operation.

7. The method for unlocking an electronic cigarette according to claim 1, the method further comprising:
pre-collecting, by the mobile terminal, at least one face image, and extracting user information in the at least one face image, respectively; and
generating the corresponding face template according to the extracted user information, and saving the generated face template in the preset face template library.

8. A system for unlocking an electronic cigarette based on face recognition, the system comprising an electronic cigarette and a mobile terminal;
wherein the mobile terminal is configured for collecting a face image, and comparing the collected face image with a preset face template library, and the mobile terminal is further configured for sending an unlocking instruction to the electronic cigarette when the comparison is successful; and
the electronic cigarette is configured for receiving the unlocking instruction, and performing a corresponding unlocking operation according to the unlocking instruction;
**characterized in that**:
the mobile terminal is further configured for establishing a communication connection with the electronic cigarette according to the instruction of the user when the mobile terminal receives a connection request of the electronic cigarette;
the electronic cigarette is further configured for sending its current status information to the mobile terminal at a predetermined time interval when the communication connection is successfully established, wherein the status information comprises a locked status and an unlocked status; and
the mobile terminal is further configured for receiving the status information, and performing the step of collecting and comparing a face image in real time when the status information is a locked status.

9. The system for unlocking an electronic cigarette according to claim 8, wherein the electronic cigarette is configured with a communication module, and the communication module comprises at least one of a WIFI module, a Bluetooth module or USB.

## Patentansprüche

1. Verfahren zum Entriegeln einer elektronischen Zigarette auf der Grundlage der Gesichtserkennung, umfassend:
beim Sammeln eines Gesichtsbildes, Vergleichen des gesammelten Gesichtsbildes mit einer voreingestellten Gesichtsschablonen-Bibliothek durch ein mobiles Endgerät,
und wenn der Vergleich erfolgreich ist, Senden einer Entriegelungsinstruktion an die elektronische Zigarette; und
Empfangen des Entriegelungsbefehls durch eine elektronische Zigarette und
Durchführen eines entsprechenden Entriegelungsvorgangs gemäß dem Entriegelungsbefehl;
**dadurch gekennzeichnet, dass**:
wobei, bevor das mobile Endgerät ein Gesichtsbild sammelt, das gesammelte Gesichtsbild mit einer voreingestellten Gesichtsschablonenbibliothek verglichen wird und, wenn der Vergleich erfolgreich ist, ein Entriegelungsbefehl an die elektronische Zigarette gesendet wird, wobei das Verfahren ferner umfasst:
wenn das mobile Endgerät eine Verbindungsanforderung der elektronischen Zigarette empfängt, Herstellen einer Kommunikationsverbindung mit der elektronischen Zigarette gemäß der Anweisung des Benutzers;
wenn die Kommunikationsverbindung erfolgreich aufgebaut ist, Senden, durch die elektronische Zigarette, ihrer aktuellen Statusinformation an das mobile Endgerät in einem vorbestimmten Zeitintervall, wobei die Statusinformation einen verriegelten Status und einen entriegelten Status umfasst;
und Empfangen der Statusinformation durch das mobile Endgerät und Ausführen des Schrittes des Sammelns und Vergleichens eines Gesichtsbildes in Echtzeit, wenn die Statusinformation ein gesperrter Status ist.

2. Verfahren zum Entriegeln einer elektronischen Zigarette nach Anspruch 1, wobei das Verfahren ferner umfasst:
wenn die Statusinformation ein entsperrter Zustand ist, Überwachung der von der elektronischen Zigarette gesendeten Statusinformation in Echtzeit durch das mobile Endgerät.

3. Verfahren zum Entriegeln einer elektronischen Zigarette nach Anspruch 1, wobei die elektronische Zigarette eine Verbindungsanforderung an das mobile Endgerät unter Verwendung eines voreingestellten Kommunikationsprotokolls sendet, wobei das voreingestellte Kommunikationsprotokoll mindestens eines der Kommunikationsprotokolle WIFI, Bluetooth oder USB umfasst.

4. Verfahren zum Entriegeln einer elektronischen Zigarette nach Anspruch 1, wobei der Schritt des Sammelns eines Gesichtsbildes, des Vergleichens des gesammelten Gesichtsbildes durch ein mobiles Endgerät mit einer voreingestellten Gesichtsvorlagenbibliothek und des Sendens einer Entsperrungsanweisung an die elektronische Zigarette, wenn der Vergleich erfolgreich ist, umfasst:
wenn ein Gesichtsbild gesammelt wird, Vergleichen des gesammelten Gesichtsbildes mit einer Gesichtsvorlage in der voreingestellten Gesichtsvorlagenbibliothek durch ein mobiles Endgerät;
wenn es eine erste Gesichtsvorlage gibt, die mit dem Gesichtsbild übereinstimmt, Bestimmen, dass der Vergleich erfolgreich ist;
und wenn der Vergleich erfolgreich ist, Senden einer Entsperrungsanweisung an die elektronische Zigarette.

5. Verfahren zum Entriegeln einer elektronischen Zigarette nach Anspruch 4, wobei der Schritt des Sendens einer Entriegelungsinstruktion an die elektronische Zigarette, wenn der Vergleich erfolgreich ist, umfasst:
wenn der Vergleich erfolgreich ist, Suchen nach einer Betriebsart, die der ersten Gesichtsvorlage entspricht, gemäß einer Übereinstimmung zwischen der voreingestellten Gesichtsvorlage und der Betriebsart;
und Erzeugen des Entriegelungsbefehls, der der ersten Gesichtsvorlage entspricht, gemäß der erworbenen Betriebsart, wobei der Entriegelungsbefehl die Betriebsart trägt.

6. Verfahren zum Entriegeln einer elektronischen Zigarette nach Anspruch 5, wobei der Schritt des Empfangens des Entriegelungsbefehls und des Durchführens eines entsprechenden Entriegelungsvorgangs gemäß dem Entriegelungsbefehl der elektronischen Zigarette umfasst:
das Empfangen des Entriegelungsbefehls durch die elektronische Zigarette und das Erlangen einer Betriebsart, die durch den Entriegelungsbefehl getragen wird;
und Einstellen entsprechender Betriebsparameter entsprechend der Betriebsart und Ausführen eines Entriegelungsvorgangs.

7. Verfahren zum Entriegeln einer elektronischen Zigarette nach Anspruch 1, wobei das Verfahren ferner umfasst:
Vorsammeln von mindestens einem Gesichtsbild durch das mobile Endgerät und
Extrahieren von Benutzerinformationen in dem mindestens einen Gesichtsbild; und Erzeugen der entsprechenden Gesichtsvorlage gemäß der extrahierten Benutzerinformation und Speichern der erzeugten Gesichtsvorlage in der voreingestellten Gesichtsvorlagenbibliothek.

8. System zum Entriegeln einer elektronischen Zigarette auf der Grundlage der Gesichtserkennung, wobei das System eine elektronische Zigarette und ein mobiles Endgerät umfasst;
wobei das mobile Endgerät so konfiguriert ist, dass es ein Gesichtsbild sammelt und das gesammelte Gesichtsbild mit einer voreingestellten Gesichtsschablonenbibliothek vergleicht, und das mobile Endgerät ferner so konfiguriert ist, dass es einen Entriegelungsbefehl an die elektronische Zigarette sendet, wenn der Vergleich erfolgreich ist;
und die elektronische Zigarette so konfiguriert ist, dass sie den Entriegelungsbefehl empfängt und einen entsprechenden Entriegelungsvorgang gemäß dem Entriegelungsbefehl durchführt;
**dadurch gekennzeichnet, dass**
das mobile Endgerät ferner konfiguriert ist, um eine Kommunikationsverbindung mit der elektronischen Zigarette gemäß der Anweisung des Benutzers herzustellen, wenn das mobile Endgerät eine Verbindungsanforderung der elektronischen Zigarette empfängt;
die elektronische Zigarette ferner konfiguriert ist zum Senden ihrer aktuellen Statusinformation an das mobile Endgerät in einem vorbestimmten Zeitintervall, wenn die Kommunikationsverbindung erfolgreich aufgebaut ist, wobei die Statusinformation einen verriegelten Status und einen entriegelten Status umfasst; und das mobile Endgerät ferner zum Empfangen der Statusinformation und zum Durchführen des Schrittes des Sammelns und Vergleichens eines Gesichtsbildes in Echtzeit konfiguriert ist, wenn die Statusinformation ein gesperrter Status ist.

9. System zum Entriegeln einer elektronischen Zigarette nach Anspruch 8, wobei die elektronische Zigarette mit einem Kommunikationsmodul konfiguriert ist, und das Kommunikationsmodul mindestens eines von einem WIFI-Modul, einem Bluetooth-Modul oder USB umfasst.

## Revendications

1. Méthode de déverrouillage d'une cigarette électronique basée sur la reconnaissance des visages, comprenant :
lors de la collecte d'une image de visage, la comparaison de l'image de visage collectée avec une bibliothèque de modèles de visages prédéfinis par un terminal mobile, et lorsque la comparaison est réussie, l'envoi d'une instruction de déverrouillage à la cigarette électronique ;
et la réception de l'instruction de déverrouillage par une cigarette électronique, et
l'exécution d'une opération de déverrouillage correspondante conformément à l'instruction de déverrouillage ;
**caractérisé en ce que** :
dans lequel, avant que le terminal mobile ne collecte une image de visage, la comparaison de l'image de visage collectée avec une bibliothèque de modèles de visage prédéfinie, et lorsque la comparaison est réussie, l'envoi d'une instruction de déverrouillage à la cigarette électronique, le procédé comprend en outre :
lorsque le terminal mobile reçoit une demande de connexion de la cigarette électronique, l'établissement d'une connexion de communication avec la cigarette électronique conformément à l'instruction de l'utilisateur ;
lorsque la connexion de communication est établie avec succès, l'envoi, par la cigarette électronique, de ses informations d'état actuelles au terminal mobile à un intervalle de temps prédéterminé, dans lequel les informations d'état comprennent un état verrouillé et un état déverrouillé ;
et la réception, par le terminal mobile, des informations d'état, et l'exécution de l'étape de collecte et de comparaison d'une image de visage en temps réel lorsque les informations d'état sont un état verrouillé.

2. Méthode de déverrouillage d'une cigarette électronique selon la revendication 1, le procédé comprenant en outre :
lorsque l'information d'état est un état déverrouillé, la surveillance, par le terminal mobile, de l'information d'état envoyée par la cigarette électronique en temps réel.

3. Méthode de déverrouillage d'une cigarette électronique selon la revendication 1, dans lequel la cigarette électronique envoie une demande de connexion au terminal mobile en utilisant un protocole de communication prédéfini, dans lequel le protocole de communication prédéfini comprend au moins un des protocoles de communication WIFI, Bluetooth ou USB.

4. Méthode de déverrouillage d'une cigarette électronique selon la revendication 1, dans lequel l'étape consistant à collecter une image de visage, un terminal mobile comparant l'image de visage collectée avec une bibliothèque de modèles de visage prédéfinis, et à envoyer une instruction de déverrouillage à la cigarette électronique lorsque la comparaison est réussie, comprend :
lors de la collecte d'une image de visage, la comparaison, par un terminal mobile, de l'image de visage collectée avec un modèle de visage dans la bibliothèque de modèles de visage prédéfinie, respectivement ;
lorsqu'il existe un premier modèle de visage correspondant à l'image du visage, la détermination que la comparaison est réussie ;
et lorsque la comparaison est réussie, envoyer une instruction de déverrouillage à la cigarette électronique.

5. Méthode de déverrouillage d'une cigarette électronique selon la revendication 4, dans lequel l'étape consistant à envoyer une instruction de déverrouillage à la cigarette électronique lorsque la comparaison est réussie, comprend :
lorsque la comparaison est réussie, la recherche d'un mode de fonctionnement correspondant au premier modèle de visage selon une correspondance entre le modèle de visage prédéfini et le mode de fonctionnement ;
et la génération de l'instruction de déverrouillage correspondant au premier modèle de visage selon le mode de fonctionnement acquis, dans lequel l'instruction de déverrouillage porte le mode de fonctionnement.

6. Méthode de déverrouillage d'une cigarette électronique selon la revendication 5, dans lequel l'étape consistant à recevoir l'instruction de déverrouillage, et à effectuer une opération de déverrouillage correspondante selon l'instruction de déverrouillage de la cigarette électronique, comprend :
la réception, par la cigarette électronique, de l'instruction de déverrouillage, et
l'acquisition d'un mode de fonctionnement porté par l'instruction de déverrouillage ;
et le réglage des paramètres de fonctionnement correspondants en fonction du mode de fonctionnement et l'exécution d'une opération de déverrouillage.

7. Méthode de déverrouillage d'une cigarette électronique selon la revendication 1, le procédé comprenant en outre :
la collecte préalable, par le terminal mobile, d'au moins une image de visage, et l'extraction d'informations d'utilisateur dans la au moins une image de visage, respectivement ;
et la génération du modèle de visage correspondant en fonction des informations utilisateur extraites, et la sauvegarde du modèle de visage généré dans la bibliothèque de modèles de visage prédéfinis.

8. Système de déverrouillage d'une cigarette électronique basé sur la reconnaissance faciale, le système comprenant une cigarette électronique et un terminal mobile ;
dans lequel le terminal mobile est configuré pour collecter une image de visage, et pour comparer l'image de visage collectée avec une bibliothèque de modèles de visage prédéfinis, et le terminal mobile est en outre configuré pour envoyer une instruction de déverrouillage à la cigarette électronique lorsque la comparaison est réussie ;
et la cigarette électronique est configurée pour recevoir l'instruction de déverrouillage, et effectuer une opération de déverrouillage correspondante conformément à l'instruction de déverrouillage ;
**caractérisé en ce que** :
le terminal mobile est en outre configuré pour établir une connexion de communication avec la cigarette électronique conformément à l'instruction de l'utilisateur lorsque le terminal mobile reçoit une demande de connexion de la cigarette électronique ;
la cigarette électronique est en outre configurée pour envoyer ses informations d'état actuelles au terminal mobile à un intervalle de temps prédéterminé lorsque la connexion de communication est établie avec succès, dans laquelle les informations d'état comprennent un état verrouillé et un état déverrouillé ;
et le terminal mobile est en outre configuré pour recevoir les informations d'état, et effectuer l'étape de collecte et de comparaison d'une image de visage en temps réel lorsque les informations d'état sont un état verrouillé.

9. Système de déverrouillage d'une cigarette électronique selon la revendication 8, dans lequel la cigarette électronique est configurée avec un module de communication, et le module de communication comprend au moins un module WIFI, un module Bluetooth ou un USB.
